# EUROPEAN PATENT APPLICATION

(11) **EP 4 693 599 A2**
(43) Date of publication of application: **11.02.2026**
(21) Application number: 25219331.3
(22) Date of filing: 28.11.2025
(51) Int. Cl.: H01M 10/42, H01M 50/121, H01M 50/124, H01M 50/14, H01M 50/188, H01M 50/586, H01M 50/593, H01M 50/119, H01M 50/531

(54) **SECONDARY BATTERY AND ELECTRIC DEVICE**

(30) Priority: 29.11.2024 CN 202411746511
(71) Applicant: Ningde Amperex Technology Limited, Ningde, Fujian 352100 (CN)
(72) Inventor: CHEN, Qiaofeng, Ningde City, Fujian Province, 352100 (CN); ZHANG, Guowen, Ningde City, Fujian Province, 352100 (CN); CHENG, Yifeng, Ningde City, Fujian Province, 352100 (CN)
(74) Representative: Kraus & Lederer PartGmbB

(57) **Abstract**

A secondary battery (100) includes an electrode assembly (20). The electrode assembly (20) includes a first electrode plate (21), where the first electrode plate (21) is provided with a first electrode terminal (24). The first electrode plate (21) has a first edge (201), a second electrode plate (22) has a second edge (202). The electrode assembly (20) includes a first portion (102) and a second portion (103). Along a second direction (Y), a total thickness of the first portion (102) is less than a total thickness of the second portion (103). A projection of the first insulating member (30) covers a projection of a portion of the first electrode terminal (24) extending beyond the second edge (202), and the projection of the first insulating member (30) is separated from a projection of the first edge (201).

## Description

### TECHNICAL FIELD

This application relates to the field of energy storage technology, and in particular, to a secondary battery and an electric device.

### BACKGROUND

In the prior art, a steel-shell battery includes a housing and an electrode assembly accommodated in the housing, where an anode electrode tab is electrically connected to the housing after gathered, and a cathode electrode tab is connected to a pole through an adapter after gathered, where the pole is connected to the housing in an insulation manner.

However, when the steel-shell battery is thin, a distance between the housing and the cathode electrode tab as well as the adapter is short. If the steel-shell battery experiences a drop or vibration, the cathode electrode tab and the adapter are likely to come into contact with the housing, thus leading to a short circuit.

### SUMMARY

In view of this, this application provides a secondary battery and an electric device, which is conducive to reducing the risk of a short circuit.

A first aspect of this application provides a secondary battery including a housing, an electrode assembly, and a first insulating member, where the housing is provided with an accommodating cavity, the electrode assembly is disposed in the accommodating cavity, and the first insulating member is disposed on an inner wall of the housing; the electrode assembly includes a first electrode plate, a second electrode plate, and a separator, where the first electrode plate and the second electrode plate have opposite polarities, and the separator is disposed between the first electrode plate and the second electrode plate; the first electrode plate is provided with a first electrode terminal, and the first electrode terminal is connected to the housing in an insulation manner; along a first direction, the first electrode plate has a first edge, the second electrode plate has a second edge, the second edge extends beyond the first edge, and the first electrode terminal is connected to the first edge and extends beyond the second edge; along the first direction, a first portion comprises the first electrode terminal and a part of the electrode assembly that is located between the first edge and the second edge, a second portion comprises the first electrode terminal and a part of the electrode assembly that is located on a side of the first edge facing away from the second edge; along a second direction, a total thickness of the first portion is less than a total thickness of the second portion; along the second direction, a projection of the first insulating member covers a projection of a portion of the first electrode terminal extending beyond the second edge, and the projection of the first insulating member is separated from a projection of the first edge; and the second direction is a thickness direction of the electrode assembly, and the second direction is perpendicular to the first direction.

Along the second direction, the projection of the first insulating member covers the projection of the portion of the first electrode terminal extending beyond the second edge. When a drop or vibration occurs, the first insulating member is conducive to reducing the risk of the first electrode terminal coming into contact with the housing along the second direction, thereby reducing the risk of a short circuit. Along the second direction, the total thickness of the first portion is less than the total thickness of the second portion, and the projection of the first insulating member is separated from the projection of the first edge, so that the first insulating member can utilize an excess thickness space of the first portion compared to the second portion along the second direction. This is conducive to reducing an additional thickness space along the second direction that needs to be reserved in the secondary battery due to the provision of the first insulating member, thereby reducing the loss of energy density in the secondary battery.

In one or more of the above embodiments, a material of the first insulating member includes at least one of polypropylene, silicone rubber, fluororubber, polyvinyl chloride, polyethylene terephthalate, polycarbonate, or nylon.

In the above embodiments, the first insulating member may be made into a gel and adhesively fixed to the housing, which is conducive to improving the stability of the first insulating member remaining fixed to the housing under long-term corrosion by an electrolyte, thereby further reducing the risk of a short circuit.

In one or more of the above embodiments, along the second direction, a thickness of the first insulating member is 5 µm to 200 µm.

In the above embodiments, the first insulating member not only satisfies the required insulation effect between the first electrode terminal and the housing but also is not excessively thick, which is conducive to further reducing the loss of energy density in the secondary battery.

In one or more of the above embodiments, a material of the first insulating member includes at least one of a ceramic coating, polytetrafluoroethylene, epoxy resin, fluorinated ethylene propylene, or polyvinylidene fluoride.

In the above embodiments, the first insulating member may be applied and fixed onto the housing, which is conducive to reducing the thickness of the first insulating member. As a result, when the number of layers of the first electrode plate and the first tab along the second direction is small and results in a small excess thickness space for stacking of multiple first tabs compared to the first electrode plate along the second direction, the additional thickness space along the second direction that needs to be reserved in the secondary battery due to the provision of the first insulating member can still be reduced, which is conducive to reducing the loss of energy density in the secondary battery.

In one or more of the above embodiments, along the second direction, a thickness of the first insulating member is 1 µm to 50 µm.

In the above embodiments, the reduction in the risk of failure of the first insulating member due to processing techniques or electrolyte corrosion is facilitated. In addition, the first insulating member is not excessively thick, which is conducive to further reducing the loss of energy density in the secondary battery.

In one or more of the above embodiments, the housing includes a first wall provided with the first insulating member, and along the second direction, a minimum distance between the first electrode terminal and the first wall is d, where d ≤ 2 mm.

In the above embodiments, when a drop or vibration occurs, the first electrode terminal is more likely to come into contact with the housing along the second direction, and the first insulating member can better reduce the risk of a short circuit.

In one or more of the above embodiments, the secondary battery includes a pole and a second insulating member; the pole is electrically connected to the first electrode terminal and penetrates the housing; the second insulating member is disposed on the housing; the second insulating member connects the pole to the housing and insulates the pole from the housing; the second insulating member includes a first insulating portion and a second insulating portion; and along the second direction, the first insulating portion is closer to the first insulating member than the second insulating portion from the first insulating member, and a projection of the first insulating member at least partially overlaps with a projection of the first insulating portion.

In the above embodiments, when a drop or vibration occurs, the first electrode terminal may shift along the first direction, and the first electrode terminal may come into contact with the housing through a gap between the pole and the housing. The projection of the first insulating member at least partially overlaps with the projection of the first insulating portion, so that the first insulating member is at least partially located between the pole and the housing along the second direction, which is conducive to further reducing the risk of a short circuit.

In one or more of the above embodiments, the secondary battery includes a third insulating member, and the third insulating member is disposed on a side of the first electrode terminal facing the first insulating member.

In the above embodiments, when a drop or vibration occurs, the first insulating member may preferentially come into contact with the third insulating member rather than directly come into contact with the first electrode terminal. The first insulating member being thin is conducive to reducing the risk of burrs on the first electrode terminal piercing the first insulating member. The third insulating member can separate the housing and the first electrode terminal along the second direction. The shift of the electrode assembly is conducive to reducing the possibility of direct contact between the housing and the first electrode terminal. This is conducive to further reducing the risk of a short circuit.

In one or more of the above embodiments, the first electrode terminal includes a first tab connected to the first edge; in the first portion, the first tab includes a metal layer and two insulating layers; along a thickness direction of the metal layer, the two insulating layers are disposed on two opposite sides of the metal layer respectively; the first electrode plate includes a first current collector and two first active material layers; along a thickness direction of the first current collector, the two first active material layers are disposed on two opposite sides of the first current collector respectively; the metal layer is electrically connected to the first current collector and extends beyond the first current collector along the first direction; and along the second direction, a projection of the insulating layer overlaps with a projection of the second electrode plate.

In the above embodiments, the insulating layer is conducive to reducing the possibility of the metal layer piercing the separator and coming into contact with the second electrode plate, thereby reducing the risk of a short circuit. In addition, along the second direction, the projection of the insulating layer overlaps with the projection of the second electrode plate, which is conducive to further reducing the risk of a short circuit.

In one or more of the above embodiments, the first electrode terminal includes a first tab connected to the first edge; in the first portion, the first tab includes a metal layer and two insulating layers; along a thickness direction of the metal layer, the two insulating layers are disposed on two opposite sides of the metal layer respectively; the first electrode plate includes a first current collector and two first active material layers; along a thickness direction of the first current collector, the two first active material layers are disposed on two opposite sides of the first current collector respectively; the metal layer is electrically connected to the first current collector and extends beyond the first current collector along the first direction; and along the second direction, a thickness of the insulating layer is less than a thickness of the first active material layer.

In the above embodiments, the insulating layer is conducive to reducing the possibility of the metal layer piercing the separator and coming into contact with the second electrode plate, thereby reducing the risk of a short circuit. In addition, along the second direction, the thickness of the insulating layer is less than the thickness of the first active material layer, and the first insulating member can utilize an excess thickness space of the insulating layer compared to the first active material layer along the second direction, which is conducive to reducing the additional thickness space along the second direction that needs to be reserved in the secondary battery due to the provision of the first insulating member, thereby reducing the loss of energy density in the secondary battery.

A second aspect of this application provides an electric device including the secondary battery according to the first aspect of this application. The secondary battery is conducive to reducing the risk of a short circuit, thereby improving the operational stability of the electric device. The loss of energy density in the secondary battery is relatively low, which is conducive to improving the endurance capability of the electric device.

### BRIEF DESCRIPTION OF DRAWINGS

FIG. 1 is an overall schematic diagram of a secondary battery according to an embodiment of this application;
FIG. 2 is a schematic cross-sectional structural diagram of a secondary battery according to a first embodiment of this application;
FIG. 3 is an enlarged view of area A in FIG. 2;
FIG. 4 is a schematic cross-sectional structural diagram of a secondary battery according to a second embodiment of this application;
FIG. 5 is a schematic cross-sectional structural diagram of a secondary battery according to a third embodiment of this application; and
FIG. 6 is a schematic diagram of an electric device according to an embodiment of this application.

Description of reference signs of main components:
1000. electric device; 100. secondary battery; 10. housing; 101. accommodating cavity; 102. first portion; 103. second portion; 11. housing body; 111. bottom wall; 112. side wall; 12. cover; 121. first wall; 20. electrode assembly; 201. first edge; 202. second edge; 21. first electrode plate; 211. first current collector; 212. first active material layer; 22. second electrode plate; 221. second current collector; 222. second active material layer; 23. separator; 24. first electrode terminal; 241. first tab; 2411. metal layer; 2412. insulating layer; 242. tab bundle; 243. adapter; 25. single-sided electrode plate; 251. third current collector; 252. third active material layer; 30. first insulating member; 40. pole; 50. second insulating member; 51. first insulating portion; 52. second insulating portion; 60. third insulating member; 70. fourth insulating member; X. first direction; and Y. second direction.

### DETAILED DESCRIPTION

The technical solutions in some embodiments of this application will be described below with reference to the drawings in these embodiments of this application. Apparently, the described embodiments are only some rather than all of these embodiments of this application.

It should be noted that when one element is assumed as being "connected to" another element, the element may be connected to the another element directly or with an element possibly present therebetween. When one component is assumed as being "disposed on/in" another component, the component may be provided directly on/in the another component or with a component possibly present therebetween.

Unless otherwise specified, the term "multiple" as used herein refers to two or more.

The terms "first," "second," and the like are used only to distinguish different objects and should not be understood as indicating or implying relative importance or implying the number, specific order, or priority of the indicated technical features.

Unless otherwise defined, all technical and scientific terms used herein have the same meaning as commonly understood by those skilled in the art of this application. The terms used in the description of this application herein are only for the purpose of describing specific embodiments and are not intended to limit this application. The term "and/or" as used herein includes any and all combinations of one or more related listed items.

It should be understood that with consideration of actual processing tolerances, when two elements are arranged in parallel/perpendicular in the technical solutions of this application, there may be a specified angle between the two elements, and a tolerance of 0 to +10% is allowed between the two elements. The angle between the two elements may be greater than, equal to, or less than the specified angle within the allowable tolerance of 0 to ±10%.

An embodiment of this application provides a secondary battery including a housing, an electrode assembly, and a first insulating member, where the housing is provided with an accommodating cavity, the electrode assembly is disposed in the accommodating cavity, and the first insulating member is disposed on an inner wall of the housing. The electrode assembly includes a first electrode plate, a second electrode plate, and a separator, where the first electrode plate and the second electrode plate have opposite polarities, and the separator is disposed between the first electrode plate and the second electrode plate. The first electrode plate is provided with a first electrode terminal, and the first electrode terminal is connected to the housing in an insulation manner. Along a first direction, the first electrode plate has a first edge, the second electrode plate has a second edge, the second edge extends beyond the first edge, and the first electrode terminal is connected to the first edge and extends beyond the second edge. Along the first direction, a first portion comprises the first electrode terminal and a part of the electrode assembly that is located between the first edge and the second edge, a second portion comprises the first electrode terminal and a part of the electrode assembly that is located on a side of the first edge facing away from the second edge. Along a second direction, a total thickness of the first portion is less than a total thickness of the second portion. Along the second direction, a projection of the first insulating member covers a projection of a portion of the first electrode terminal extending beyond the second edge, and the projection of the first insulating member is separated from a projection of the first edge. The second direction is a thickness direction of the electrode assembly. The second direction is perpendicular to the first direction.

Along the second direction, the projection of the first insulating member covers the projection of the portion of the first electrode terminal extending beyond the second edge. When a drop or vibration occurs, the first insulating member is conducive to reducing the risk of the first electrode terminal coming into contact with the housing along the second direction, thereby reducing the risk of a short circuit. Along the second direction, the total thickness of the first portion is less than the total thickness of the second portion, and the projection of the first insulating member is separated from the projection of the first edge, so that the first insulating member can utilize an excess thickness space of the first portion compared to the second portion along the second direction. This is conducive to reducing an additional thickness space along the second direction that needs to be reserved in the secondary battery due to the provision of the first insulating member, thereby reducing the loss of energy density in the secondary battery.

The following will describe some embodiments of this application with reference to the drawings. In the absence of conflict, some embodiments described below and the features in these embodiments may be combined with each other.

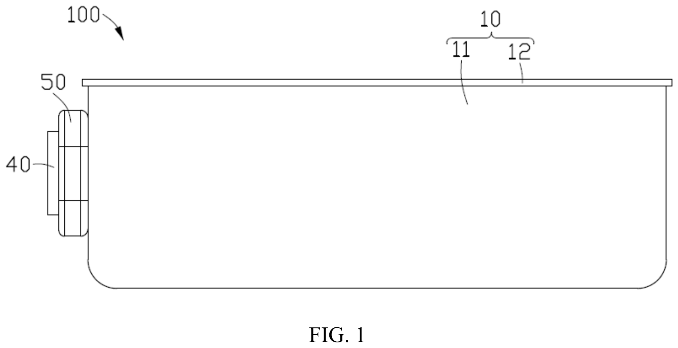

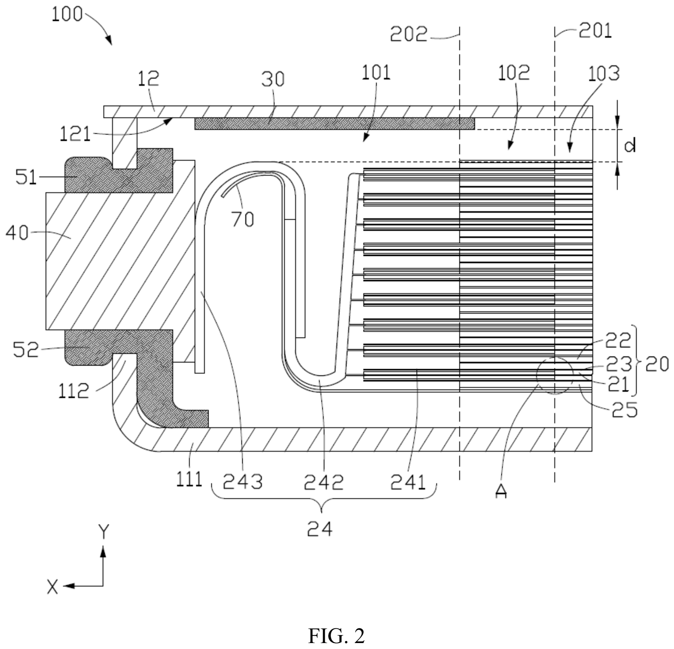

Referring to FIG. 1 and FIG. 2, an embodiment of this application provides a secondary battery 100 including a housing 10, an electrode assembly 20, and a first insulating member 30.

The housing 10 is provided with an accommodating cavity 101. In some embodiments, the housing 10 includes a housing body 11 and a cover 12, where the housing body 11 is recessed in a direction facing away from the cover 12, and the cover 12 is connected to the housing body 11 to form the accommodating cavity 101.

In some embodiments, the housing body 11 includes a bottom wall 111 and a side wall 112, the side wall 112 surrounds a periphery of the bottom wall 111, and the cover 12 covers the side wall 112.

In some embodiments, a material of the housing 10 is steel.

The electrode assembly 20 is disposed in the accommodating cavity 101. The electrode assembly 20 includes a first electrode plate 21, a second electrode plate 22, and a separator 23, where the first electrode plate 21 and the second electrode plate 22 have opposite polarities, and the separator 23 is disposed between the first electrode plate 21 and the second electrode plate 22. In some embodiments, the accommodating cavity 101 is filled with an electrolyte to facilitate the formation of a current loop between the first electrode plate 21 and the second electrode plate 22.

In some embodiments, the first electrode plate 21 is a cathode electrode plate, and the second electrode plate 22 is an anode electrode plate.

In some embodiments, the electrode assembly 20 is a stacked structure, where the stacked structure is formed by alternately stacking the first electrode plate 21 and the second electrode plate 22. The separator 23 is disposed between the first electrode plate 21 and the second electrode plate 22 adjacent to each other. In some embodiments, the electrode assembly 20 is a wound structure, where the wound structure is formed by sequentially stacking and then winding the first electrode plate 21, the separator 23, and the second electrode plate 22.

In some embodiments, along a second direction Y, a projection of the separator 23 covers a projection of the first electrode plate 21 and a projection of the second electrode plate 22. This is conducive to reducing the risk of a short circuit due to contact between the first electrode plate 21 and the second electrode plate 22. The second direction Y is a thickness direction of the electrode assembly 20. The second direction Y is perpendicular to a first direction X.

The first electrode plate 21 is provided with a first electrode terminal 24, the first electrode terminal 24 extends out of the first electrode plate 21 along the first direction X, and the first electrode terminal 24 is connected to the housing 10 in an insulation manner. In some embodiments, the second electrode plate 22 is provided with a second electrode terminal (not shown in the figure), and the second electrode terminal is electrically connected to the housing 10. In some embodiments, the first electrode terminal 24 is connected to the side wall 112 of the housing body 11 in an insulation manner, and the second electrode terminal is electrically connected to the cover 12.

Referring to FIG. 2, along the first direction X, the first electrode plate 21 has a first edge 201, and the second electrode plate 22 has a second edge 202. Along the first direction X, the second edge 202 extends beyond the first edge 201, the first electrode terminal 24 is connected to the first edge 201, and the first electrode terminal 24 extends beyond the second edge 202. Along the first direction X, a first portion 102 comprises the first electrode terminal 24 and a part of the electrode assembly 20 that is located between the first edge 201 and the second edge 202, a second portion 103 comprises the first electrode terminal 24 and a part of the electrode assembly 20 that is located on a side of the first edge 201 facing away from the second edge 202. Along the second direction Y, a total thickness of the first portion 102 is less than a total thickness of the second portion 103.

It should be noted that the total thickness of the first portion 102 along the second direction Y refers to a maximum actual thickness occupied by the first electrode terminal 24, the second electrode plate 22, and the separator 23 in the first portion 102 along the second direction Y; and the total thickness of the second portion 103 along the second direction Y refers to a maximum actual thickness occupied by the first electrode plate 21, the second electrode plate 22, and the separator 23 in the second portion 103 along the second direction Y.

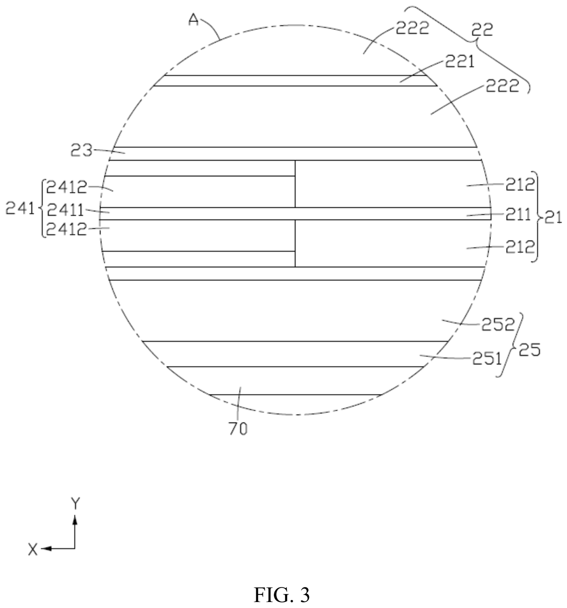

In some embodiments, referring to FIG. 3, the first electrode plate 21 includes a first current collector 211 and two first active material layers 212, where along a thickness direction of the first current collector 211, the two first active material layers 212 are disposed on two opposite sides of the first current collector 211 respectively. The second electrode plate 22 includes a second current collector 221 and second active material layers 222, where along the first direction X, the second active material layers 222 are disposed on both sides of the second current collector 221. In some embodiments, the thickness direction of the first current collector 211 is parallel to the second direction Y.

In some embodiments, along the second direction Y, the separator 23 is disposed between the first active material layer 212 and the second active material layer 222.

In some embodiments, referring to FIG. 2, the first electrode terminal 24 includes multiple first tabs 241, and the first tab 241 is connected to the first edge 201. In the first portion 102, the first tab 241 includes a metal layer 2411 and two insulating layers 2412 (referring to FIG. 3), where along a thickness direction of the metal layer 2411, the two insulating layers 2412 are disposed on two opposite sides of the metal layer 2411 respectively. The insulating layer 2412 is conducive to reducing the possibility of the metal layer 2411 piercing the separator 23 and coming into contact with the second electrode plate 22, thereby reducing the risk of a short circuit. In some embodiments, the thickness direction of the metal layer 2411 is parallel to the second direction Y.

In some embodiments, along the second direction Y, a thickness of the first tab 241 is less than a thickness of the first electrode plate 21.

In some embodiments, along the second direction Y, a projection of the insulating layer 2412 overlaps with a projection of the second electrode plate 22. This is conducive to further reducing the possibility of the metal layer 2411 piercing the separator 23 and coming into contact with the second electrode plate 22, thereby further reducing the risk of a short circuit.

In some embodiments, the metal layer 2411 is electrically connected to the first current collector 211, and the metal layer 2411 extends beyond the first current collector 211 along the first direction X.

In some embodiments, the metal layer 2411 is welded or riveted to the first current collector 211. With the first edge 201 as a boundary, the metal layer 2411 includes a fixed portion (not shown in the figure) and an extension portion (not shown in the figure), where the fixed portion is welded or riveted to the first current collector 211, and the extension portion is connected to the fixed portion and extends beyond the first edge 201 along the first direction X. In some embodiments, a material of the metal layer 2411 is different from a material of the first current collector 211.

In some embodiments, the metal layer 2411 is integrally formed with the first current collector 211. For example, the metal layer 2411 and the first current collector 211 are die-cut from a single sheet, and the metal layer 2411 is directly connected to the first edge 201. In some embodiments, a material of the metal layer 2411 is the same as a material of the first current collector 211.

In some embodiments, referring to FIG. 2, the first electrode terminal 24 includes a tab bundle 242, and multiple first tabs 241 are gathered in the tab bundle 242. In another embodiment, multiple first tabs 241 are sequentially stacked along the second direction Y and welded to form the tab bundle 242.

In some embodiments, the tab bundle 242 gathers the multiple first tabs 241 in a direction facing away from the first insulating member 30, and then the tab bundle 242 bends and extends toward the first insulating member 30.

In some embodiments, referring to FIG. 2, the first electrode terminal 24 includes an adapter 243, and the adapter 243 is connected to the tab bundle 242. In some embodiments, the adapter 243 is connected to a section of the tab bundle 242 extending toward the first insulating member 30.

In some embodiments, the adapter 243 is welded to the tab bundle 242.

In some embodiments, the adapter 243 is connected to the tab bundle 242 and then extends and bends toward the first insulating member 30, and the bent tab bundle 242 extends along a direction facing away from the first insulating member 30.

In some embodiments, a material of the adapter 243 includes one or more of conductive materials such as copper, aluminum, nickel, and nickel alloy.

Referring to FIG. 2, the first insulating member 30 is disposed on an inner wall of the housing 10. In some embodiments, the first insulating member 30 is disposed on the cover 12.

Along the second direction Y, a projection of the first insulating member 30 covers a projection of a portion of the first electrode terminal 24 extending beyond the second edge 202. When a drop or vibration occurs, the first insulating member 30 is conducive to reducing the risk of the first electrode terminal 24 coming into contact with the housing 10 along the second direction Y, thereby reducing the risk of a short circuit.

Along the second direction Y, the projection of the first insulating member 30 is separated from a projection of the first edge 201. Since the total thickness of the first portion 102 is less than the total thickness of the second portion 103 along the second direction Y, the first insulating member 30 can utilize an excess thickness space of the first portion 102 compared to the second portion 103 along the second direction Y. This is conducive to reducing an additional thickness space along the second direction Y that needs to be reserved in the secondary battery 100 due to the provision of the first insulating member 30, thereby reducing the loss of energy density in the secondary battery 100.

In some embodiments, along the second direction Y, a thickness of the insulating layer 2412 is less than a thickness of the first active material layer 212. The first insulating member 30 can utilize an excess thickness space of the insulating layer 2412 compared to the first active material layer 212 along the second direction Y, which is conducive to reducing the additional thickness space along the second direction Y that needs to be reserved in the secondary battery 100 due to the provision of the first insulating member 30, thereby reducing the loss of energy density in the secondary battery 100.

In some embodiments, a material of the first insulating member 30 includes at least one of polypropylene, silicone rubber, fluororubber, polyvinyl chloride, polyethylene terephthalate, polycarbonate, or nylon. In this case, the first insulating member 30 may be made into a gel and adhesively fixed to the housing 10, which is conducive to improving the stability of the first insulating member 30 remaining fixed to the housing 10 under long-term corrosion by an electrolyte, thereby further reducing the risk of a short circuit.

In some embodiments, a material of the first insulating member 30 includes at least one of a ceramic coating, polytetrafluoroethylene, epoxy resin, fluorinated ethylene propylene, or polyvinylidene fluoride. In this case, the first insulating member 30 may be applied and fixed onto the housing 10, which is conducive to reducing the thickness of the first insulating member 30. As a result, when the number of layers of the first electrode plate 21 and the first tab 241 along the second direction Y is small and results in a small excess thickness space for stacking of multiple first tabs 241 compared to the first electrode plate 21 along the second direction Y, the additional thickness space along the second direction Y that needs to be reserved in the secondary battery 100 due to the provision of the first insulating member 30 can still be reduced, which is conducive to reducing the loss of energy density in the secondary battery 100.

In some embodiments, at a temperature of 60°C to 100°C, for example, at 60°C, 70°C, 80°C, 90°C, or 100°C, the first insulating member 30 remains fixed to the housing 10 after immersed in an electrolyte for two hours. Preferably, at a temperature of 85°C, the first insulating member 30 remains fixed to the housing 10 after immersed in an electrolyte for seven days.

In some embodiments, at a temperature of 85°C, an impedance value change of the first insulating member 30 before and after the first insulating member 30 is immersed in an electrolyte for seven days is less than 80%. Preferably, the impedance value change of the first insulating member 30 is less than 20%. In this case, the corrosion resistance of the first insulating member 30 is relatively good, which is conducive to improving the effectiveness of the first insulating member 30 in maintaining insulation between the housing 10 and the first electrode terminal 24.

In some embodiments, a material of the first insulating member 30 includes at least one of polypropylene, silicone rubber, fluororubber, polyvinyl chloride, polyethylene terephthalate, polycarbonate, or nylon. Along the second direction Y, a thickness of the first insulating member 30 is greater than or equal to 5 µm. This is conducive to enabling the first insulating member 30 to satisfy the required insulation effect between the first electrode terminal 24 and the housing 10.

In some embodiments, a material of the first insulating member 30 includes polypropylene, and along the second direction Y, a thickness of the first insulating member 30 is greater than or equal to 10 µm.

In some embodiments, a material of the first insulating member 30 includes at least one of polypropylene, silicone rubber, fluororubber, polyvinyl chloride, polyethylene terephthalate, polycarbonate, or nylon. Along the second direction Y, a thickness of the first insulating member 30 is 5 µm to 500 µm. For example, the thickness of the first insulating member 30 is 5 µm, 10 µm, 20 µm, 50 µm, 100 µm, 150 µm, 200 µm, 300 µm, 400 µm, or 500 µm.

In some embodiments, a material of the first insulating member 30 includes at least one of polypropylene, silicone rubber, fluororubber, polyvinyl chloride, polyethylene terephthalate, polycarbonate, or nylon. Along the second direction Y, a thickness of the first insulating member 30 is 5 µm to 200 µm. In this case, the first insulating member 30 not only satisfies the required insulation effect between the first electrode terminal 24 and the housing 10 but also is not excessively thick, which is conducive to further reducing the loss of energy density in the secondary battery 100.

In some embodiments, a material of the first insulating member 30 includes at least one of a ceramic coating, polytetrafluoroethylene, epoxy resin, fluorinated ethylene propylene, or polyvinylidene fluoride. Along the second direction Y, a thickness of the first insulating member 30 is greater than or equal to 0.1 µm. This is conducive to reducing the possibility of burrs or other microscopic structures piercing the first insulating member 30.

In some embodiments, a material of the first insulating member 30 includes a ceramic coating, and along the second direction Y, a thickness of the first insulating member 30 is greater than or equal to 0.1 µm.

In some embodiments, a material of the first insulating member 30 includes at least one of a ceramic coating, polytetrafluoroethylene, epoxy resin, fluorinated ethylene propylene, or polyvinylidene fluoride. Along the second direction Y, a thickness of the first insulating member 30 is 0.1 µm to 200 µm. For example, the thickness of the first insulating member 30 is 0.1 µm, 0.5 µm, 1 µm, 5 µm, 10 µm, 20 µm, 30 µm, 50 µm, 100 µm, or 200 µm.

In some embodiments, a material of the first insulating member 30 includes at least one of a ceramic coating, polytetrafluoroethylene, epoxy resin, fluorinated ethylene propylene, or polyvinylidene fluoride. Along the second direction Y, a thickness of the first insulating member 30 is 1 µm to 50 µm. This is conducive to reducing the risk of failure of the first insulating member 30 due to processing techniques or electrolyte corrosion, and the first insulating member 30 is not excessively thick, which is conducive to further reducing the loss of energy density in the secondary battery 100.

In some embodiments, referring to FIG. 2, the housing 10 includes a first wall 121 provided with the first insulating member 30; and along the second direction Y, a minimum distance between the first electrode terminal 24 and the first wall 121 is d, where d ≤ 2 mm. For example, d is 0.5 mm, 1 mm, 1.5 mm, or 2 mm. In this case, when a drop or vibration occurs, the first electrode terminal 24 is more likely to come into contact with the housing 10 along the second direction Y, and the first insulating member 30 can better reduce the risk of a short circuit.

In some embodiments, the first wall 121 is located on the cover 12, and the first insulating member 30 is disposed on a side of the cover 12 facing the accommodating cavity 101.

In some embodiments, the minimum distance between the first electrode terminal 24 and the first wall 121 along the second direction Y refers to the minimum of a minimum distance between the first tab 241 and the first wall 121 along the second direction Y, a minimum distance between the tab bundle 242 and the first wall 121 along the second direction Y, and a minimum distance between the adapter 243 and the first wall 121 along the second direction Y.

In some embodiments, referring to FIG. 3, the secondary battery 100 includes a pole 40, the pole 40 is electrically connected to the first electrode terminal 24, and the pole 40 penetrates the housing 10. In some embodiments, the pole 40 is connected to a section of the adapter 243 away from the tab bundle 242, the pole 40 penetrates the side wall 112 of the housing body 11, and the pole 40 is insulated from the housing 10.

In some embodiments, along the second direction Y, there is a gap between the pole 40 and the housing 10. In some embodiments, along the second direction Y, there is a gap between the pole 40 and the first wall 121.

In some embodiments, the secondary battery 100 includes a second insulating member 50, the second insulating member 50 is disposed on the housing 10, and the second insulating member 50 connects the pole 40 to the housing 10 and insulates the pole 40 from the housing 10. In some embodiments, the second insulating member 50 is disposed on the side wall 112 of the housing body 11. Along the first direction X and the second direction Y, at least a portion of the second insulating member 50 is located between the pole 40 and the side wall 112.

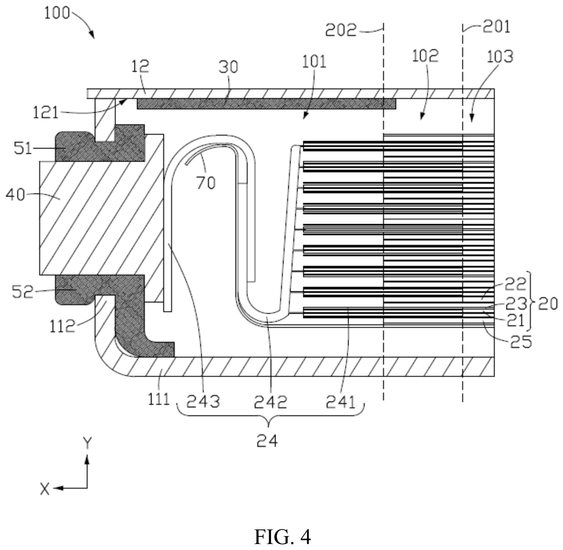

In some embodiments, referring to FIG. 4, the second insulating member 50 includes a first insulating portion 51 and a second insulating portion 52. Along the second direction Y, the first insulating portion 51 is closer to the first insulating member 30 than the second insulating portion 52 from the first insulating member 30, and a projection of the first insulating member 30 at least partially overlaps with a projection of the first insulating portion 51. When a drop or vibration occurs, the first electrode terminal 24 may shift along the first direction X, and the first electrode terminal 24 may come into contact with the housing 10 through a gap between the pole 40 and the housing 10 (for example, the cover 12). The projection of the first insulating member 30 at least partially overlaps with the projection of the first insulating portion 51, so that the first insulating member 30 is at least partially located between the pole 40 and the housing 10 along the second direction Y, which is conducive to further reducing the risk of a short circuit.

In some embodiments, along the second direction Y, a projection of the adapter 243 at least partially overlaps with a projection of the second insulating portion 52. When a drop or vibration occurs, this is conducive to reducing the possibility of a section of the adapter 243 away from the tab bundle 242 coming into contact with the housing 10 (for example, the bottom wall 111 of the housing body 11), further reducing the risk of a short circuit.

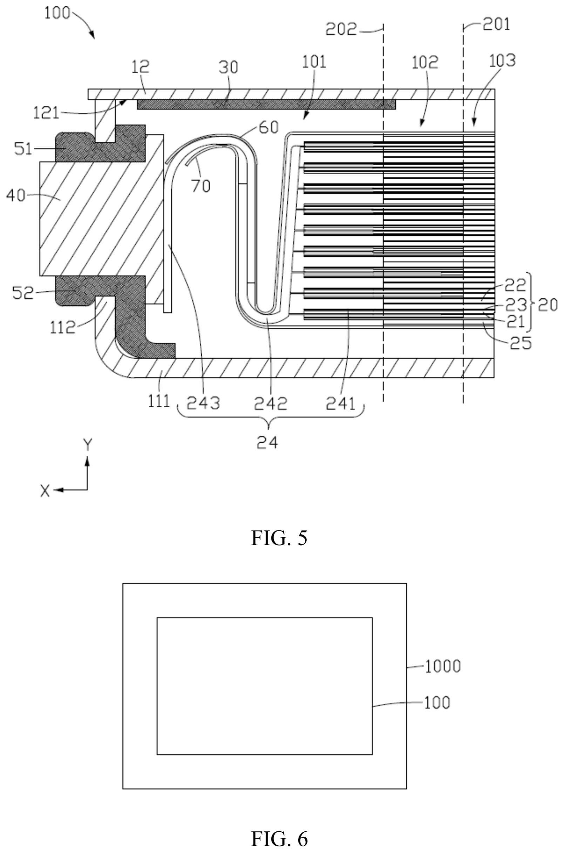

In some embodiments, referring to FIG. 5, the secondary battery 100 includes a third insulating member 60, and the third insulating member 60 is disposed on a side of the first electrode terminal 24 facing the first insulating member 30. When a drop or vibration occurs, the first insulating member 30 may preferentially come into contact with the third insulating member 60 rather than directly come into contact with the first electrode terminal 24. The first insulating member 30 being thin is conducive to reducing the risk of burrs on the first electrode terminal 24 piercing the first insulating member 30. The third insulating member 60 can separate the housing 10 and the first electrode terminal 24 along the second direction Y. The shift of the electrode assembly 20 is conducive to reducing the possibility of direct contact between the housing 10 and the first electrode terminal 24. This is conducive to further reducing the risk of a short circuit.

In some embodiments, along the second direction Y, a projection of the third insulating member 60 covers a projection of the first electrode terminal 24, and the projection of the third insulating member 60 at least partially overlaps with a projection of the first insulating member 30.

In some embodiments, the third insulating member 60 is shaped to match the first electrode terminal 24. This is conducive to reducing the space occupied by the third insulating member 60 and the first electrode terminal 24 in the accommodating cavity 101, thereby increasing the energy density of the secondary battery 100.

In some embodiments, the third insulating member 60 is fixed to an outermost electrode plate of the electrode assembly 20 facing the first insulating member 30.

In some embodiments, referring to FIG. 5, the secondary battery 100 includes a fourth insulating member 70, and the fourth insulating member 70 is disposed on a side of the first electrode terminal 24 facing away from the first insulating member 30. When a drop or vibration occurs, this is conducive to reducing the possibility of the first electrode terminal 24 coming into contact with the housing 10 (for example, the bottom wall 111 of the housing body 11) in a direction opposite to the second direction Y, thereby reducing the risk of a short circuit.

In some embodiments, along the second direction Y, a projection of the fourth insulating member 70 at least partially overlaps with a projection of the second insulating portion 52. When a drop or vibration occurs, the cooperation of the fourth insulating member 70 and the second insulating portion 52 is conducive to further reducing the possibility of the first electrode terminal 24 coming into contact with the housing 10 (for example, the bottom wall 111 of the housing body 11) in a direction opposite to the second direction Y, further reducing the risk of a short circuit.

In some embodiments, the fourth insulating member 70 is fixed to an outermost electrode plate of the electrode assembly 20 facing away from the first insulating member 30.

In some embodiments, referring to FIG. 3, an outermost electrode plate of the electrode assembly 20 is a single-sided electrode plate 25. The single-sided electrode plate 25 includes a third current collector 251 and a third active material layer 252, and the third active material layer 252 is disposed only on a side of the single-sided electrode plate 25 facing the interior of the electrode assembly 20. On one hand, this is conducive to improving the stability of the third insulating member 60 and/or the fourth insulating member 70 fixed to the single-sided electrode plate 25; on the other hand, the third active material layer 252 is not provided on a side of the single-sided electrode plate 25 facing away from the interior of the electrode assembly 20, which is conducive to further increasing the energy density of the secondary battery 100.

In some embodiments, the secondary battery 100 includes a fixing member (not shown in the figure), and the fixing member is disposed in the accommodating cavity 101. The electrode assembly 20 is fixedly connected to the housing 10 through the fixing member. When a drop or vibration occurs, this is conducive to reducing the possibility of the electrode assembly 20 shifting relative to the housing 10, thereby reducing the possibility of the first electrode terminal 24 shifting.

In some embodiments, the fixing member is a hot-melt adhesive.

Referring to FIG. 6, an embodiment of this application provides an electric device 1000 including the secondary battery 100 as described above. The secondary battery 100 is conducive to reducing the risk of a short circuit, thereby improving the operational stability of the electric device 1000. The loss of energy density in the secondary battery 100 is low, which is conducive to improving the endurance capability of the electric device 1000. The electric device 1000 includes but is not limited to electronic devices such as mobile phones, tablet computers, and laptops.

In addition, those of ordinary skill in the art should recognize that the above embodiments are only used to illustrate this application and are not intended to limit this application. Appropriate changes and variations to the above embodiments, as long as they are within the essential scope of this application, fall within the scope of the disclosure of this application.

## Claims

1. A secondary battery (100), comprising:
a housing (10) provided with an accommodating cavity (101);
an electrode assembly (20) disposed in the accommodating cavity (101); and the electrode assembly (20) comprising a first electrode plate (21), a second electrode plate (22), and a separator (23); wherein the first electrode plate (21) and the second electrode plate (22) have opposite polarities, and the separator (23) is disposed between the first electrode plate (21) and the second electrode plate (22); the first electrode plate (21) is provided with a first electrode terminal (24), and the first electrode terminal (24) is connected to the housing (10) in an insulation manner; along a first direction (X), the first electrode plate (21) has a first edge (201), the second electrode plate (22) has a second edge (202), the second edge (202) extends beyond the first edge (201), and the first electrode terminal (24) is connected to the first edge (201) and extends beyond the second edge (202); along the first direction (X), a first portion (102) comprises the first electrode terminal (24) and a part of the electrode assembly (20) that is located between the first edge (201) and the second edge (202), a second portion (103) comprises the first electrode terminal (24) and a part of the electrode assembly (20) that is located on a side of the first edge (201) facing away from the second edge (202); and along a second direction (Y), a total thickness of the first portion (102) is less than a total thickness of the second portion (103); and
a first insulating member (30) disposed on an inner wall of the housing (10), wherein along the second direction (Y), a projection of the first insulating member (30) covers a projection of a portion of the first electrode terminal (24) extending beyond the second edge (202), and the projection of the first insulating member (30) is separated from a projection of the first edge (201); and the second direction (Y) is a thickness direction of the electrode assembly (20), and the second direction (Y) is perpendicular to the first direction (X).

2. The secondary battery (100) according to claim 1, wherein a material of the first insulating member (30) comprises at least one of polypropylene, silicone rubber, fluororubber, polyvinyl chloride, polyethylene terephthalate, polycarbonate, or nylon.

3. The secondary battery (100) according to claim 1 or 2, wherein along the second direction (Y), a thickness of the first insulating member (30) is 5 µm to 200 µm.

4. The secondary battery (100) according to claim 1, wherein a material of the first insulating member (30) comprises at least one of a ceramic coating, polytetrafluoroethylene, epoxy resin, fluorinated ethylene propylene, or polyvinylidene fluoride.

5. The secondary battery (100) according to claim 1 or 4, wherein along the second direction (Y), a thickness of the first insulating member (30) is 1 µm to 50 µm.

6. The secondary battery (100) according to any one of claims 1 to 5, wherein the housing (10) comprises a first wall (121) provided with the first insulating member (30); and along the second direction (Y), a minimum distance between the first electrode terminal (24) and the first wall (121) is d, wherein d ≤ 2 mm.

7. The secondary battery (100) according to any one of claims 1 to 6, wherein the secondary battery (100) further comprises a pole (40) and a second insulating member (50); the pole (40) is electrically connected to the first electrode terminal (24) and penetrates the housing (10); the second insulating member (50) is disposed on the housing (10); the second insulating member (50) connects the pole (40) to the housing (10) and insulates the pole (40) from the housing (10); the second insulating member (50) comprises a first insulating portion (51) and a second insulating portion (52); and along the second direction (Y), the first insulating portion (51) is closer to the first insulating member (30) than the second insulating portion (52) from the first insulating member (30), and the projection of the first insulating member (30) at least partially overlaps with a projection of the first insulating portion (51).

8. The secondary battery (100) according to any one of claims 1 to 7, wherein the secondary battery (100) further comprises a third insulating member (60), and the third insulating member (60) is disposed on a side of the first electrode terminal (24) facing the first insulating member (30).

9. The secondary battery (100) according to any one of claims 1 to 8, wherein the first electrode terminal (24) comprises a first tab (241) connected to the first edge (201); in the first portion (102), the first tab (241) comprises a metal layer (2411) and two insulating layers (2412); along a thickness direction of the metal layer (2411), the two insulating layers (2412) are disposed on two opposite sides of the metal layer (2411) respectively; the first electrode plate (21) comprises a first current collector (211) and two first active material layers (212); along a thickness direction of the first current collector (211), the two first active material layers (212) are disposed on two opposite sides of the first current collector (211) respectively; the metal layer (2411) is electrically connected to the first current collector (211) and extends beyond the first current collector (211) along the first direction (X); and along the second direction (Y), a projection of the insulating layer (2412) overlaps with a projection of the second electrode plate (22).

10. The secondary battery (100) according to any one of claims 1 to 8, wherein the first electrode terminal (24) comprises a first tab (241) connected to the first edge (201); in the first portion (102), the first tab (241) comprises a metal layer (2411) and two insulating layers (2412); along a thickness direction of the metal layer (2411), the two insulating layers (2412) are disposed on two opposite sides of the metal layer (2411) respectively; the first electrode plate (21) comprises a first current collector (211) and two first active material layers (212); along a thickness direction of the first current collector (211), the two first active material layers (212) are disposed on two opposite sides of the first current collector (211) respectively; the metal layer (2411) is electrically connected to the first current collector (211) and extends beyond the first current collector (211) along the first direction (X); and along the second direction (Y), a thickness of the insulating layer (2412) is less than a thickness of the first active material layer (212).

11. An electric device (1000), comprising the secondary battery (100) according to any one of claims 1 to 10, and the secondary comprises:
a housing (10) provided with an accommodating cavity (101);
an electrode assembly (20) disposed in the accommodating cavity (101); and the electrode assembly (20) comprising a first electrode plate (21), a second electrode plate (22), and a separator (23); wherein the first electrode plate (21) and the second electrode plate (22) have opposite polarities, and the separator (23) is disposed between the first electrode plate (21) and the second electrode plate (22); the first electrode plate (21) is provided with a first electrode terminal (24), and the first electrode terminal (24) is connected to the housing (10) in an insulation manner; along a first direction (X), the first electrode plate (21) has a first edge (201), the second electrode plate (22) has a second edge (202), the second edge (202) extends beyond the first edge (201), and the first electrode terminal (24) is connected to the first edge (201) and extends beyond the second edge (202); along the first direction (X), a first portion (102) comprises the first electrode terminal (24) and a part of the electrode assembly (20) that is located between the first edge (201) and the second edge (202), a second portion (103) comprises the first electrode terminal (24) and a part of the electrode assembly (20) that is located on a side of the first edge (201) facing away from the second edge (202); and along a second direction (Y), a total thickness of the first portion (102) is less than a total thickness of the second portion (103); and
a first insulating member (30) disposed on an inner wall of the housing (10), wherein along the second direction (Y), a projection of the first insulating member (30) covers a projection of a portion of the first electrode terminal (24) extending beyond the second edge (202), and the projection of the first insulating member (30) is separated from a projection of the first edge (201); and the second direction (Y) is a thickness direction of the electrode assembly (20), and the second direction (Y) is perpendicular to the first direction (X).

12. The electric device (1000) according to claim 11, wherein a material of the first insulating member (30) comprises at least one of polypropylene, silicone rubber, fluororubber, polyvinyl chloride, polyethylene terephthalate, polycarbonate, or nylon; along the second direction (Y), a thickness of the first insulating member (30) is 5 µm to 200 µm.

13. The electric device (1000) according to claim 11, wherein a material of the first insulating member (30) comprises at least one of a ceramic coating, polytetrafluoroethylene, epoxy resin, fluorinated ethylene propylene, or polyvinylidene fluoride; along the second direction (Y), a thickness of the first insulating member (30) is 1 µm to 50 µm.

14. The electric device (1000) according to any one of claims 11 to 13, wherein the housing (10) comprises a first wall (121) provided with the first insulating member (30); and along the second direction (Y), a minimum distance between the first electrode terminal (24) and the first wall (121) is d, wherein d ≤ 2 mm.

15. The electric device (1000) according to any one of claims 11 to 14, wherein the secondary battery (100) further comprises a third insulating member (60), and the third insulating member (60) is disposed on a side of the first electrode terminal (24) facing the first insulating member (30).
